# EUROPÄISCHE PATENTSCHRIFT

(11) **EP 0 524 450 B1**
(45) Veröffentlichungstag und Bekanntmachung des Hinweises auf die Patenterteilung: **07.02.1996**
(21) Anmeldenummer: 92110853.6
(22) Anmeldetag: 26.06.1992
(51) Int. Cl.: F16H 61/06

(54) **Verfahren zur Steuerung des Betätigungsdrucks in einem Stellglied eines elektrohydraulisch gesteuerten Kraftfahrzeuggetriebes**
Method for controlling actuation pressure of an actuator in an electrohydraulically controlled vehicle transmission
Méthode de commande de pression d'utilisation d'un actuateur d'une transmission de véhicule commandée électrohydrauliquement

(30) Priorität: 25.07.1991 DE 4124603
(43) Veröffentlichungstag der Anmeldung: 27.01.1993
(73) Patentinhaber: Dr.Ing.h.c. F. Porsche Aktiengesellschaft, D-70435 Stuttgart (DE)
(72) Erfinder: Seidel, Willi, W-7147 Eberdingen-Hochdorf (DE); Petersmann, Joseph, W-7251 Wimsheim (DE)

(56) Entgegenhaltungen:
- EP-A- 0 231 593
- EP-A- 0 231 593
- EP-A- 0 435 377
- US-A- 5 014 575
- US-A- 5 014 575

## Beschreibung

Bei elektrohydraulisch gesteuerten Kraftfahrzeuggetrieben erfolgt ein Wechsel der Gangstufe durch Ansteuern bestimmter Stellglieder, wie Kupplungen und Bremsen. Die hydraulisch betätigten Stellglieder stellen hierzu den Kraftschluss zwischen bestimmten Getrieberadsätzen und einer Antriebsmaschine des Kraftfahrzeugs oder dem Gehäuse des Getriebes her.

Ein derartiges Getriebe geht aus Bosch Technische Berichte 7 (1983) 4, Seiten 160 bis 166 und aus ATZ Automobiltechnische Zeitschrift 85 (1983) 6, Seiten 401 bis 405 hervor. Die Stellglieder werden über elektromagnetische Schaltventile alternativ mit einem druckgeregelten Hydraulikkreis oder mit einer Drucksenke verbunden. Das Steuergerät steuert ferner betriebsparameterabhängig ein elektromagnetisch betätigtes Druckregelventil, mittels dem ein Druckmedium von einer Druckquelle in den Hydraulikkreis einspeißbar ist. Mittels des Druckregelventils wird ein bestimmter betriebsparameterabhängiger Druck in dem Hydraulikkreis eingeregelt.

Das Schaltventil, die das Druckmedium stromab des Ventils führenden Leitungen und das Stellglied selbst, weisen prinzipbedingt ein nicht zu vernachlässigendes, von Fertigungsstreuungen behaftetes oder betriebsparameterabhängiges oder alterungsbedingtes variables Füllvolumen auf. Ebenso ist dem Stellglied ein zur Ausführung einer geforderten Stellbewegung erforderliches, von Fertigungsstreuungen behaftetes oder betriebsparameterabhäniges oder alterungsbedingtes variables Betätigungsvolumen des Druckmediums zuzuführen.

Die gesamte Ansteuerung eines Stellglieds setzt sich somit aus den Phasen "Stellglied befüllen" und "Stellglied betätigen" zusammen. Die für den Wechsel der Gangstufe erforderliche Zeit ergibt sich daher aus der Addition der zu beiden Phasen benötigten Zeiten. Niedrige Drücke im Hydraulikkreis, wie sie insbesondere bei Rückschaltungen im Schubbetrieb vorliegen, können hierbei jedoch nicht für eine ausreichend schnelle Befüllung der beteiligten Hydrauliksysteme sorgen. Hierdurch ergeben sich zwangsläufig lange Zeiträume für den Wechsel der Gangstufen.

Bei einem Wechsel der Gangstufe entleert sich ein abzusteuerndes Stellglied (der herauszunehmenden Gangstufe) relativ rasch, so daß die Kraftübertragung nahezu sofort unterbrochen wird; da ein nennenswerter Kraftfluß in dem zu betätigenden Stellglied aufgrund der längeren Befüllzeit noch nicht vorhanden ist, kann somit der Kraftfluß zwischen Antriebsmaschine und Getriebeabtrieb insgesamt unterbrochen werden. Die Drehzahl der Antriebsmaschine fällt daher während der Füllzeit des Stellgliedes unter Umständen bis zu Leerlaufdrehzahl ab.

Zwar könnte durch weiteres Erhöhen des während des Gangstufenwechsels eingestellten Drucks die Füllzeit verkürzt werden. Daraus resultiert jedoch ein wesentlich verschlechterter Schaltkomfort, da die Kupplungen bzw. Bremsen dann sehr rasch schließen. Dies macht sich durch einen mehr oder weniger starken Ruck im Antriebsstrang und nicht zuletzt in der Längsdynamik des gesamten Fahrzeugs bemerkbar.

Aus der EP-A-0 231 593 ist eine adaptive Schaltdruck-Steuerung für automatische Getriebe bekannt, bei der zur Überwindung der Leerwege in dem Betätigungselement des Getriebes diese mit einem Füllimpuls beaufschlagt werden. Die Adaption des Füllpulses erfolgt durch Veränderungen der Zeit während der der Füllpuls wirksam ist. Zur Einstellung dieser Zeitdauer wird geprüft, mit welcher Verzögerung nach Einleiten eines Gangwechsels sich die Eingangsdrehzahl des Getriebes ändert. Diese Verzögerung wird mit einem Sollwert verglichen und bei Abweichungen wird die Zeitdauer des Füllpulses entsprechend verändert.

Es ist Aufgabe der Erfindung, ein Verfahren zur Steuerung des Betätigungsdruckes in einem Stellglied eines elektrohydraulisch gesteuerten Kraftfahrzeuggetriebes zu schaffen, bei dem die anzusteuernden Stellglieder nahezu unabhängig vom Betriebszustand des Kraftfahrzeuges gleichmäßig befüllt werden, ohne daß der Kraftfluß zwischen Antriebsmaschine und Getriebeausgang wesentlich reduziert wird.

Die Erfindung ist durch die kennzeichnenden Merkmale des Anspruchs 1 gelöst; weitere, die Erfindung in vorteilhafter Weise ausgestaltende Merkmale sind den Unteransprüchen zu entnehmen.

Die Vorteile der Erfindung sind in erster Linie darin zu sehen, daß ein Verfahren zu Steuerung des Betätigungsdrucks in Stellgliedern eines elektrohydraulisch gesteuerten Kraftfahrzeuggetriebes geschaffen ist, bei dem die Stellglieder des Getriebes, wie z.B. Kupplungen und Bremsen, bei einer Ansteuerung praktisch unabhängig vom Betriebszustand des Kraftfahrzeugs gleichmäßig befüllt werden und somit der Kraftfluß zwischen Antriebsmaschine und Getriebeausgang nicht maßgeblich unterbrochen wird. Ein übermäßiges Abfallen der Motordrehzahl während des Wechsels der Gangstufe wird somit, insbesondere bei Rückschaltungen im Schubbetrieb, vermieden.

Dies wird insbesondere dadurch erreicht, daß mit einer mittels eines Schaltventils bewirkten Ansteuerung eines Stellgliedes aus dem drucklosen Zustand heraus über ein Druckregelventil zeitlich begrenzt ein gegenüber dem beim Wechsel der Gangstufe eingeregelter Druck weiter erhöhter Druck (Füllpuls pg) im Hydraulikkreis eingestellt wird, welcher ausgehend von einem voreinstellbaren oder voreingestellten Grundwert ps im Laufe des Betriebes des Getriebes, pro Ansteuervorgang selbsttätig schrittweise (Druckanpassung pa) derart an einen Zielwert angepasst wird (pg=ps+pa), daß eine Eingangsdrehzahl des Getriebes oder eine Drehzahl (Motordrehzahl nmot) einer dem Getriebe vorgeschalteten Antriebsmaschine einem vorgegebenen Bewegungsablauf folgt oder mit einem vorgegebenen Bewegungsablauf reagiert.

Die Erfindung ist nachstehend anhand der Zeichnungen näher erläutert:

Es zeigt:
- Fig. 1: ein Druck-Zeit-Diagramm, gemäß dem der Druck in einem Hydraulikkreis eines elektrohydraulisch gesteuerten Getriebes beim Wechsel der Gangstufe gesteuert wird,
- Fig. 2: ein Drehzahl-Zeit-Diagramm für eine Drehzahl einer dem Getriebe vorgeschalteten Antriebsmaschine.

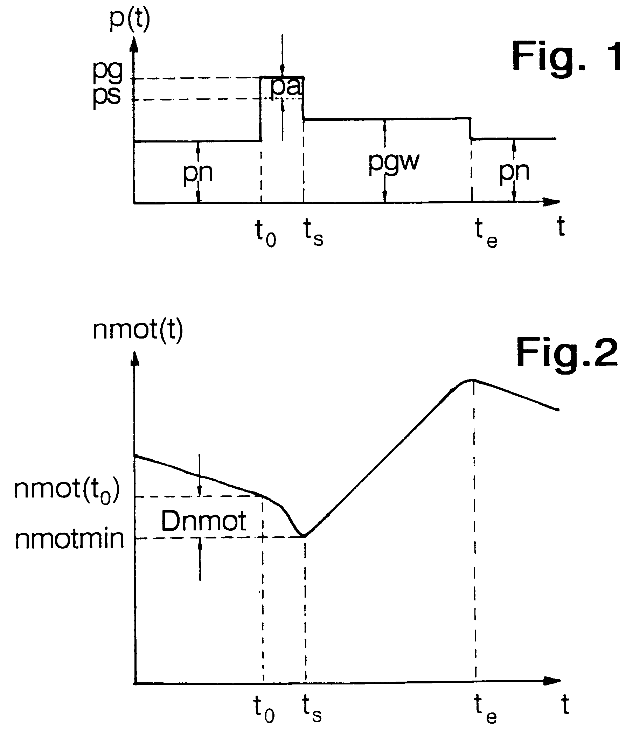

In Fig. 1 ist in einem Diagramm über der Zeit (t) ein Druck p(t) in einem Hydraulikkreis eines elektrohydraulisch gesteuerten mehrgängigen Getriebes gezeigt.

Bei diesen Getrieben, wie sie z.B. in Bosch Technische Berichte 7 (1983) 4 auf den Seiten 160 bis 166 und der DE-Z: ATZ Automobiltechnische Zeitschrift 85 (1983) 6 auf den Seiten 401 bis 405 beschrieben sind (mehrgängige Getriebe mit Planetenradsätzen), wird über ein elektromagnetisch betätigtes Druckregelventil ein Druckmedium von einer Druckquelle in einen Hydraulikkreis eingespeist.

Zur Einregelung eines bestimmten betriebsparameterabhängigen Drucks wird das Druckregelventil über ein elektronisches Steuergerät, welches diese Betriebsparameter erfasst oder nachbildet, angesteuert. Das Druckregelventil kann hierbei als Proportionalventil oder als proportional wirkendes, getaktes betriebenes Ventil oder als vergleichbar wirkende Drucksteuervorrichtung ausgeführt sein.

Über das Steuergerät werden ferner Schaltventile angesteuert, über die bestimmte Stellglieder oder Schaltglieder des Getriebes, wie Bremsen oder Kupplungen, alternativ mit dem druckführenden Hydraulikkreis oder einer Drucksenke (Sumpf) verbindbar sind.

Der Druck im Hydraulikkreis wird im normalen Betrieb des Getriebes mit eingelegter Gangstufe auf einen betriebsparameterabhängigen Normaldruck pn eingeregelt; die Höhe des Normaldrucks pn wird derart eingestellt, daß das (oder die) bei der augenblicklich eingelegten Gangstufe wirksame(-n) Stellglied (-er) das Antriebsmoment einer dem Getriebe vorgeschalteten Antriebsmaschine zum Radantrieb ohne Schlupf sicher überträgt (übertragen).

Beim Wechsel der Gangstufe werden über die Schaltventile bestimmte Stellglieder vom Hydraulikkreis getrennt und mit der Drucksenke verbunden (herauszunehmende Gangstufe) während andere Stellglieder über die angesteuerten Schaltventile mit dem Hydraulikkreis verbunden werden.

Zur Sicherstellung des erforderlichen Betätigungsdrucks und zum Erreichen eines bestimmten Schaltkomforts wird während des Wechsels der Gangstufe über das Druckregelventil ein leicht erhöhter Druck pgw eingestellt, so daß die Stellglieder ihren entsprechenden Betätigungsweg in einer bestimmten Zeit (vom Zeitpunkt t₀ bei Beginn bis zum Zeitpunkt tₑ am Ende des Gangwechsels) zurücklegen können.

Im allgemeinen weisen die Schaltventile, die das Druckmedium stromab des Ventils führenden Leitungen und das Stellglied selbst ein nicht zu vernachlässigendes Füllvolumen auf, das in der Regel von Fertigungsstreuungen behaftet ist und alterungsbedingt sein kann und in der Regel betriebsparameterabhängig variiert. Ferner muB dem Stellglied zur Ausführung einer geforderten Stellbewegung ein bestimmtes Betätigungsvolumen zugeführt werden, das ebenfalls von Fertigungsstreuungen behaftet sein kann und betriebsparameterabhängig ist und sich durch Abnützung und Alterung zusätzlich im Laufe des Betriebs des Kraftfahrzeugs ändert.

Unter bestimmten Betriebsbedingungen des Kraftfahrzeugs, beispielsweise bei Rückschaltungen (Erhöhen der Übersetzung) im Schubbetrieb des Kraftfahrzeugs wird nun durch das Steuergerät, bedingt durch den lastfreien Zustand, der Normaldruck pn bzw. der leicht erhöhte Druck pgw relativ niedrig eingestellt. Während die Stellglieder der herauszunehmenden Gangstufe relativ rasch drucklos werden, baut sich der Druck in den Stellgliedern beim Ansteuern aus dem drucklosen Zustand heraus aufgrund des nicht zu vernachlässigenden Füllvolumens bzw. Betätigungsvolumens und des niedrigeren Drucks im Hydraulikkreis nur relativ langsam auf, so daß es gemäß Fig. 2 zu einem Absinken (Durchtauchen) der Motordrehzahl nach dem Beginn des Gangstufenwechsels bei t₀ kommt. Erst ab dem Zeitpunkt tₛ, wenn die Stellglieder befüllt sind, kommt es dann wiederum zu einem Anstieg der Motordrehzahl nmot(t).

Zur Begrenzung des Durchtauchens der Drehzahl (Motordrehzahl nmot) der dem Getriebe vorgeschalteten Antriebsmaschine bei einem derartigen Wechsel der Gangstufe wird daher gemäß Fig. 1 zwischen den Zeitpunkten t₀ und tₛ mit der mittels des Schaltventils bewirkten Ansteuerung des Stellglieds aus dem drucklosen Zustand heraus über das Druckregelventil zeitlich begrenzt ein erhöhter Druck (Füllpuls pg) im Hydraulikkreis eingestellt, wie dies der Fig.1 zu entnehmen ist. Der erhöhte Druck wird, ausgehend von einem voreinstellbaren oder voreingestellten Grundwert ps, im Laufe des Betriebs des Getriebes pro Ansteuervorgang selbsttätig schrittweise (Druckanpassung pa) derart an einen Zielwert (pg=ps+pa) angepasst, daß eine Eingangsdrehzahl des Getriebes oder die Motordrehzahl einem vorgegebenen Bewegungsablauf folgt oder mit einem vorgegebenen Bewegungsablauf reagiert, wie er in Fig. 2 dargestellt ist.

Die Höhe der Druckanpassung pa des Grundwerts ps wird hierbei durch einen berechneten Wert begrenzt, welcher sich ergibt, wenn sämtliche Systeme an den den schlechtesten Fall ergebenden Systemgrenzen liegen (Getriebeteile an der Toleranzgrenze, Stellglieder nahezu abgenützt).

In der Regel ist die Einstellung des erhöhten Drucks (Füllpuls pg) nur bei Rückschaltungen im Schubbetrieb, d.h. im lastlosen Zustand, notwendig. Die Druckhöhe des Füllpuls pg ist jedoch bevorzugt drehzahlabhängig. Der Drehzahlbereich der Brennkraftmaschine wird hierbei zur Vereinfachung der Ansteuerung in Bereiche eingeteilt und dem Füllpuls pg pro Bereich eine bestimmte Druckhöhe zugewiesen.

Zusätzlich kann noch eine Unterscheidung der Druckhöhe des Füllpulses nach den zu wechselnden Gangstufen vorgenommen werden, da ja in der Regel die Füll- und Betätigungsvolumina der einzelnen einzulegenden Gangstufen unterschiedlich sind. Ebenso kann der auszugebende Füllpuls pg getrennt nach Grundwert ps und Druckanpassung pa abgelegt werden, so daß die Grundwerte nur einmal bei Programmierung des Steuergerätes vorgegeben werden müssen und lediglich die Werte der Druckanpassung pa während des Betriebs des Kraftfahrzeugs ständig angepasst bzw. erneuert werden. Die Werte für Grundwert ps und Druckanpassung pa werden im Steuergerät bevorzugt in Form von Tabellen abgelegt.

Zur Bestimmung des dem Grundwert ps des Füllpulses zuzuschlagenden Anteils der Druckanpassung pa wird nun zunächst der Wert nmot(t₀) der Motordrehzahl nmot(t) bei Einleitung der Rückschaltung zum Zeitpunkt t=t₀ gemäß Fig. 2 erfasst und zwischengespeichert. Danach wird das während des Gangwechsels auftretende Minimum der Motordrehzahl nmotmin erfasst und die Differenz (Durchtauchdrehzahl Dnmot) aus den beiden erfassten Werten (Dnmot=nmot(t₀)-nmotmin) ermittelt und die Durchtauchdrehzahl Dnmot und mit einem Wert einer zulässigen maximalen Durchtauchdrehzahl Dnmotmax und einem Wert einer zulässigen minimalen Durchtauchdrehzahl Dnmotmin verglichen.

Hierbei werden drei Fälle unterschieden:
1. Die Durchtauchdrehzahl Dnmot ist größer als der Wert der zulässigen maximalen Durchtauchdrehzahl Dnmotmax (Dnmot>Dnmotmax): Durch Hinzufügen eines zu einer Differenz Dnmot-Dnmotmax aus der Durchtauchdrehzahl Dnmot und dem Wert der maximal zulässigen Durchtauchdrehzahl Dnmotmax proportionalen Wert zum Wert der beim letzten entsprechenden Wechsel der Gangstufe ermittelten Wert der Druckanpassung paalt wird die Druckanpassung pa:=paneu=paalt+kpa*(Dnmot-Dnmotmax) neu ermittelt und abgespeichert.
2. Ist die Durchtauchdrehzahl Dnmot kleiner als der Wert der zulässigen minimalen Durchtauchdrehzahl Dnmotmin (Dnmot<Dnmotmin), so wird vom Wert der beim letzten entsprechenden Wechsel der Gangstufe ermittelten Wert der Druckanpassung paalt ein zu einer Differenz Dnmot-Dnmotmax aus der Durchtauchdrehzahl Dnmot und dem Wert der maximal zulässigen Durchtauchdrehzahl Dnmotmax proportionaler Wert abgezogen: pa:=paneu=paalt-kpa*(Dnmot-Dnmotmax).
3. Liegt die Durchtauchdrehzahl Dnmot zwischen der minimalen Durchtauchdrehzahl Dnmotmin und der maximalen Durchtauchdrehzahl Dnmotmax, so wird der beim letzten entsprechenden Wechsel der Gangstufe ermittelte Wert der Druckanpassung paalt beibehalten: pa:=paneu=paalt.

Der Faktor kpa ist hierbei ein Proportionalfaktor. Die zeitliche Begrenzung des Füllpulses pg ergibt sich durch die Zeitdifferenz zwischen den Zeitpunkten t₀ und tₛ, d.h. vom Beginn der Schaltung bis zum Erreichen der minimalen Durchtauchdrehzahl nmotmin. Durch die so aufgezeigte Anpassung des Füllpulses pg ergibt sich schließlich der gewünschte vorgegebene Bewegungsablauf der Antriebsmaschine.

## Patentansprüche

1. Verfahren zur Steuerung des Betätigungsdrucks (pg) in einem Stellglied eines elektrohydraulisch gesteuerten Getriebes eines Kraftfahrzeugs während eines Wechsels der Gangstufe, mit wenigstens einem über ein Steuergerät betriebsparameterabhängig gesteuerten elektromagnetisch betätigten Druckregelventil, mittels dessen ein Druckmedium von einer Druckquelle in einen Hydraulikkreis einspeisbar und ein bestimmter betriebsparameterabhängiger Druck (pn) in dem Hydraulikkreis einregelbar ist, welcher beim Wechsel der Gangstufe um einen bestimmten Betrag (pgw erhöht wird, und einem vom Steuergerät angesteuerten Schaltventil, das das Stellglied alternativ mit dem druckgeregelten Hydraulikkreis oder mit einer Drucksenke verbindet, wobei das Schaltventil, die das Druckmedium stromab des Ventils führenden Leitungen und das Stellglied selbst ein nicht zu vernachlässigendes, durch Fertigungsstreuungen und/oder betriebsparameterabhängig und/oder alterungsbedingt variables Füllvolumen aufweisen, und dem Stellglied ein zur Ausführung einer geforderten Stellbewegung erforderliches, durch Fertigungsstreuungen und/oder betriebsparameterabhängig und/oder alterungsbedingt variables Betätigungsvolumen des Druckmediums in der Weise zugeführt wird, daß mit einer mittels des Schaltventils bewirkten Ansteuerung des Stellglieds aus dem drucklosen Zustand heraus über das Druckregelventil zeitlich begrenzt ein gegenüber dem beim Wechsel der Gangstufe eingeregelten Druck (pgw) weiter erhöhter Druck (Füllpuls pg) im Hydraulikkreis eingestellt wird, **dadurch gekennzeichnet**, daß der weiter erhöhte Druck (Füllpuls pg) ausgehend von einem voreinstellbaren oder voreingestellten Grundwert (ps) im Laufe des Betriebs des Getriebes pro Ansteuervorgang selbsttätig schrittweise (Druckanpassung pa) derart an einen Zielwert angepaßt wird (pg=ps+pa), daß ein Drehzahlabfall einer Eingangsdrehzahl des Getriebes oder einer Drehzahl (Motordrehzahl nmot) einer dem Getriebe vorgeschalteten Antriebsmaschine innerhalb vorgegebener Grenzen liegt.

2. Verfahren nach Anspruch 1, **dadurch gekennzeichnet**, daß der erhöhte Druck (Füllpuls pg) lediglich vom Beginn des Wechsels (Zeitpunkt t₀) der Gangstufe an bis zu demjenigen Zeitpunkt (tₛ) eingestellt wird, bei dem die Drehzahl (Motordrehzahl nmot) der Antriebsmaschine ihr Minimum durchschreitet.

3. Verfahren nach Anspruch 1 oder 2, **dadurch gekennzeichnet**, daß die Höhe der Druckanpassung des Grundwerts (ps) durch einen berechneten Wert begrenzt ist, welcher sich ergibt, wenn sämtliche Systeme an den den schlechtesten Fall ergebenden Systemgrenzen liegen.

4. Verfahren nach Anspruch 3, wobei das Stellglied eine Kupplung oder eine Bremse eines mehrgängigen Getriebes mit Planetenradsätzen betätigt, und wobei das Stellglied zum Einlegen wenigstens einer Gangstufe des Getriebes dient und das Druckregelventil den Druck im Hydraulikkreis auf einen variablen, von den Betriebsbedingungen des Kraftfahrzeugs, wenigstens jedoch von dem vom Getriebe zu übertragenden Drehmoment abhängigen Wert einstellt, **dadurch gekennzeichnet**, daß der Füllpuls (pg) von den zu wechselnden Gangstufen und von der Richtung des Gangstufenwechsels abhängig ist.

5. Verfahren nach Anspruch 4, **dadurch gekennzeichnet**, daß vom Steuergerät nur bei Rückschaltungen im Schubbetrieb ein Füllpuls (pg) eingestellt wird.

6. Verfahren nach Anspruch 5, **dadurch gekennzeichnet**, daß der Füllpuls (pg) drehzahlabhängig ist.

7. Verfahren nach Anspruch 6, **dadurch gekennzeichnet**, daß der Drehzahlbereich der Brennkraftmaschine in Bereiche eingeteilt wird und dem Füllpuls (pg) pro Bereich eine bestimmte Druckhöhe zugewiesen wird.

8. Verfahren nach Anspruch 7, **dadurch gekennzeichnet**, daß der dem Grundwert (ps) des Füllpulses zuzuschlagende Anteil (Druckanpassung pa) unter
- Erfassen und Zwischenspeichern des Werts (nmot(t₀)) der Drehzahl (Motordrehzahl nmot(t)) der dem Getriebe vorgeschalteten Antriebsmaschine bei Einleitung der Rückschaltung (Zeitpunkt t=t₀ der Ansteuerung des Ventils),
- Erfassen des während des Gangwechsels auftretenden Minimums der Motordrehzahl (nmotmin),
- Ermitteln der Differenz (Durchtauchdrehzahl Dnmot) aus den beiden erfaßten Werten (Dnmot=nmot(t₀)-nmotmin) und
- Vergleichen der Durchtauchdrehzahl (Dnmot) mit einem Wert einer zulässigen minimalen Durchtauchdrehzahl (Dnmotmin) und mit einem Wert einer zulässigen maximalen Durchtauchdrehzahl (Dnmotmax),
ermittelt wird
- durch Hinzufügen eines zu einer Differenz (Dnmot-Dnmotmax) aus der Durchtauchdrehzal (Dnmot) und dem Wert der maximal zulässigen Durchtauchdrehzahl (Dnmotmax) proportionalen Werts zum Wert der beim letzten entsprechenden Wechsel der Gangstufe ermittelten Wert der Druckanpassung (paalt), sofern die Durchtauchdrehzahl (Dnmot) größer als der Wert der zulässigen maximalen Durchtauchdrehzahl (Dnmotmax) ist (Dnmot>Dnmotmax): (pa:=paneu=paalt+kpa*(Dnmot-Dnmotmax));
- durch Abziehen eines zu einer Differenz (Dnmot-Dnmotmax) aus der Durchtauchdrehzahl (Dnmot) und dem Wert der maximal zulässigen Durchtauchdrehzahl (Dnmotmax) proportionalen Werts vom Wert der beim letzten entsprechenden Wechsel der Gangstufe ermittelten Wert der Druckanpassung (paalt), sofern die Durchtauchdrehzahl (Dnmot) kleiner als der Wert der zulässigen minimalen Durchtauchdrehzahl (Dnmotmin) ist (Dnmot<Dnmotmin): (pa:=paneu=paalt-kpa*(Dnmot-Dnmotmax));
- durch Beibehalten des beim letzten entsprechenden Wechsel der Gangstufe ermittelten Werts der Druckanpassung (paalt), sofern die Durchtauchdrehzahl (Dnmot) zwischen der minimalen Durchtauchdrehzahl (Dnmotmin) und der maximalen Durchtauchdrehzahl (Dmnotmax) liegt (Dnmotmin<Dnmot<Dnmotmax): (pa:=paneu=paalt).

## Claims

1. A method of controlling the actuation pressure **(pg)** in an actuator of an electrohydraulically controlled transmission of a motor vehicle during a gear change, having at least one electromagnetically actuated pressure-regulating valve which is controlled as a function of the operating parameters by way of a control member and by means of which a pressure fluid can be supplied into an hydraulic circuit from a pressure source and a specific pressure **(pn)** dependent upon the operating parameters can be regulated in the hydraulic circuit, the pressure **(pn)** being increased by a specific amount **(pgw)** during a gear change, and having a gear-shift valve actuated by the control member and connecting the actuator alternately to the pressure-regulated hydraulic circuit or to a pressure sink, wherein the gear-shift valve, the lines conveying the pressure fluid downstream of the valve and the actuator itself have a considerable filling volume variable by manufacturing variations and/or as a function of the operating parameters and/or as a result of ageing, and the actuator has supplied thereto an actuation volume of the pressure fluid necessary for performing a required adjustment movement and variable by manufacturing variations and/or as a function of the operating parameters and/or as a result of ageing, in such a way that a pressure (filling pulse **pg**) further increased with respect to the pressure **(pgw)** regulated during the gear change is set for a limited time in the hydraulic circuit by an actuation - caused by means of the gear-shift valve - of the actuator out of the pressure-less state by way of the pressure-regulating valve, **characterized in that** the further increased pressure (filling pulse **pg**) starting from a pre-settable or pre-set base value **(ps)** is adapted automatically stepwise (pressure adaptation **pa**) in such a way **(pg = ps + pa)** to a target value in the course of the operation of the transmission per actuation that a drop in the input rotational speed of the transmission or in a rotational speed (engine speed **nmot**) of a driving engine arranged in front of the transmission occurs within pre-set limits.

2. A method according to Claim 1, **characterized in that** the increased pressure (filling pulse **pg**) is set only from the beginning of changing (time **t₀**) the gear to the time **(t**_{**s**}**)** at which the rotational speed (engine speed **nmot**) of the driving engine exceeds its minimum.

3. A method according to Claim 1 or 2, **characterized in that** the level of the pressure adaptation of the base value **(ps)** is limited by a calculated value which occurs when all the systems are at the system limits resulting in the worst case.

4. A method according to Claim 3, wherein the actuator actuates a coupling or a brake of a multiple-speed transmission with sets of planetary gears, and wherein the actuator is used for engaging at least one gear of the transmission and the pressure-regulating valve sets the pressure in the hydraulic circuit to a variable value dependent upon the operating conditions of the motor vehicle, and at least upon the torque to be transmitted by the transmission, **characterized in that** the filling pulse **(pg)** is dependent upon the gears to be changed and upon the direction of the gear change.

5. A method according to Claim 4, **characterized in that** a filling pulse **(pg)** is set by the actuator only during shifting down in thrust operation.

6. A method according to Claim 5, **characterized in that** the filling pulse **(pg)** is dependent upon the rotational speed.

7. A method according to Claim 6, **characterized in that** the rotational-speed range of the internal-combustion engine is subdivided into areas and a specific pressure level is apportioned to the filling pulse **(pg)** *per* area.

8. A method according to Claim 7, **characterized in that** the portion (pressure adaptation **pa**) to be added to the base value **(ps)** of the filling pulse while
- detecting and temporarily storing the value (**nmot (t₀)**) of the rotational speed (engine speed **nmot (t)**) of the driving engine arranged in front of the transmission when initiating the shifting down (time **t=t₀** of the actuation of the valve),
- detecting the minimum of the engine speed **nmotmin**) occurring during the gear change,
- determining the difference (dropping rotational speed **Dnmot**) from the two values **(Dnmot=nmot (t₀)-nmotmin)** detected, and
- comparing the dropping rotational speed **(Dnmot)** with a value of a minimum permissible dropping rotational speed **(Dnmotmin)** and with a value of a maximum permissible dropping rotational speed **(Dnmotmax)**,
is determined
- by adding a value - proportional to a difference **(Dnmot-Dnmotmax)** between the dropping rotational speed **(Dnmot)** and the value of the maximum permissible dropping rotational speed **(Dnmotmax)** - to the value of the value[s] of the pressure adaptation (old **pa**) determined during the last corresponding change of the gears, provided that the dropping rotational speed **(Dnmot)** is greater than the value of the maximum permissible dropping rotational speed **(Dnmotmax) (Dnmot>Dnmotmax)**: (**pa:**=new **pa**=old **pa+kpa*(Dnmot-Dnmotmax)**);
- by subtracting a value - proportional to a difference **(Dnmot-Dnmotmax)** between the dropping rotational speed **(Dnmot)** and the value of the maximum permissible dropping rotational speed **(Dnmotmax)** - from the value of the value[s] of the pressure adaptation (old **pa**) determined during the last corresponding change of the gears, provided that the dropping rotational speed **(Dnmot)** is smaller than the value of the minimum permissible dropping rotational speed **(Dnmotmin) (Dnmot<Dnmotmin)**: (**pa:**=new **pa**=old **pa-kpa*(Dnmot-Dnmotmax)**);
- by retaining the value of the pressure adaptation (old **pa**) determined during the last corresponding change of the gears, provided that the dropping rotational speed **(Dnmot)** lies between the minimum dropping rotational speed **(Dnmotmin)** and the maximum dropping rotational speed **(Dnmotmax)**
**(Dnmotmin<Dnmot<Dnmotmax)**: (**pa:**=new **pa**=old **pa**).

## Revendications

1. Procédé de commande de la pression d'actionnement (pg) dans un organe de positionnement de boîte de vitesses à commande électro-hydraulique d'un véhicule automobile pendant un changement de rapport, avec au moins une soupape de régulation de pression actionnée électromagnétiquement, commandée en fonction de paramètres de service, par l'intermédiaire d'un appareil de commande, au moyen de laquelle un fluide sous pression peut être alimenté à partir d'une source de pression dans un circuit hydraulique et une pression (pn) déterminée, dépendant des paramètres de service, peut être réglée dans le circuit hydraulique, laquelle, au changement de rapport, est augmentée d'une valeur déterminée (pgw), et avec au moins une soupape de commutation commandée par l'appareil de commande, qui relie l'organe de positionnement alternativement avec le circuit hydraulique réglé en pression ou avec une source négative de pression, la soupape de commutation, les conduites conduisant le fluide sous pression en aval de la soupape et l'organe de positionnement lui-même présentant un volume de remplissage non négligeable, variable du fait de dispersions de fabrication et/ou dépendant de paramètres de service et/ou dû au vieillissement, et à l'organe de positionnement étant envoyé un volume d'actionnement du fluide sous pression, nécessaire à l'exécution d'un mouvement de positionnement exigé, variable du fait de dispersions de fabrication et/ou dépendant de paramètres de service et/ou dû à un vieillissement, de manière qu'avec une commande de l'organe de positionnement, opérée au moyen de la soupape de commutation, à partir de l'état sans pression, par l'intermédiaire de la soupape de régulation de pression, de manière limitée dans le temps, il soit réglé dans le circuit hydraulique une pression (pulsion de remplissage pg) encore accrue par rapport à la pression (pgw) réglée lors du changement de rapport, caractérisé en ce que la pression encore accrue (pulsion de remplissage), partant d'une valeur de base (ps), préréglable ou préréglée, est automatiquement adaptée, au cours du fonctionnement de la boîte de vitesses, par opération de commande, pas à pas (adaptation de pression pa) à une valeur-cible (pg = ps + pa), de manière qu'une chute d'une vitesse de rotation d'entrée de la boîte de vitesses ou d'une vitesse de rotation (vitesse de rotation du moteur nmot) d'une machine d'entraînement montée en amont de la boîte de vitesses, se situe à l'intérieur de limites données.

2. Procédé selon la revendication 1, caractérisé en ce que la pression accrue (pulsion de remplissage pg) est réglée uniquement à partir du début du changement (instant tₒ) du rapport jusqu'à l'instant (tₛ), auquel la vitesse de rotation (vitesse de rotation du moteur nmot) de la machine d'entraînement dépasse son minimum.

3. Procédé selon les revendications 1 ou 2, caractérisé en ce que la hauteur de l'adaptation de pression de la valeur de base (ps) est limitée par une valeur calculée, qui s'obtient lorsque tous les systèmes se situent aux limites du système donnant le cas le plus mauvais.

4. Procédé selon la revendication 3 dans lequel l'organe de positionnement actionne un embrayage ou un frein d'une boîte de vitesses à plusieurs rapports avec engrenages planétaires, et dans lequel l'organe de positionnement sert à enclencher au moins un rapport de la boîte de vitesses, et la soupape de régulation de pression règle la pression dans le circuit hydraulique sur une valeur variable, dépendant des conditions de service du véhicule automobile, mais au moins du couple de rotation à transmettre par la boîte de vitesses, caractérisé en ce que la pulsion de remplissage (pg) dépend des rapports à changer et du sens du changement de rapport.

5. Procédé selon la revendication 4, caractérisé en ce qu'une pulsion de remplissage (pg) est réglée par l'appareil de commande uniquement en cas de rétrogradations, en fonctionnement en poussée.

6. Procédé selon la revendication 5, caractérisé en ce que la pulsion de remplissage (pg) dépend de la vitesse de rotation.

7. Procédé selon la revendication 6, caractérisé en ce que la gamme de vitesses de rotation du moteur à combustion interne est partagée en domaines et une hauteur de pression déterminée est affectée à la pulsion de remplissage (pg) par domaine.

8. Procédé selon la revendication 7, caractérisé en ce que la composante à ajouter à la valeur de base (ps) de la pulsion de remplissage (adaptation de pression pa) est déterminée par
- détection et stockage intermédiaire de la valeur (nmot(tₒ)) de la vitesse de rotation (vitesse de rotation du moteur (nmot(t)) de la machine d'entraînement montée en amont de la boîte de vitesses, à l'amorce de la rétrogradation (instant t = tₒ de la commande de la soupape),
- détection du minimum de la vitesse de rotation du moteur (nmotmin), survenant lors du changement de rapport,
- détermination de la différence (valeur de la réduction de la vitesse de rotation Dnmot) entre les deux valeurs détectées (Dnmot = nmot(tₒ) - nmotmin) et
- comparaison de la valeur de la réduction de la vitesse de rotation (Dnmot) avec une valeur d'une réduction de vitesse de rotation minimale admissible (Dnmotmin) et avec une valeur d'une réduction de vitesse de rotation maximale admissible (Dnmotmax),
- par ajout d'une valeur proportionnelle à une différence (Dnmot - Dnmotmax) résultant de la valeur de réduction de la vitesse de rotation (Dnmot) et de la valeur de réduction de la vitesse de rotation maximale admissible (Dnmotmax), à la valeur de l'adaptation de pression (pa ancien) déterminée lors du dernier changement correspondant du rapport, si la valeur de la réduction de vitesse de rotation (Dnmot) est supérieure à la valeur de réduction de la vitesse de rotation maximale admissible (Dnmotmax) (Dnmot > Dnmotmax) : (pa : = pa nouveau = pa ancien + kpa* (Dnmot - Dnmotmax))) ;
- par déduction d'une valeur proportionnelle à une différence (Dnmot - Dnmotmax) entre la valeur de réduction de la vitesse de rotation (Dnmot) et la valeur de réduction de la vitesse de rotation maximale admissible (Dnmotmax), de la valeur de l'adaptation de pression (pa ancien) déterminée lors du dernier changement correspondant de rapport, si la valeur de la vitesse de rotation (Dnmot) est inférieure à la valeur de réduction de la vitesse de rotation minimale admissible (Dnmotmin) (Dnmot < Dnmotmin) : pa : = pa nouveau = pa ancien - kpa* (Dnmot - Dnmotmax)) ;
- par maintien de la valeur de l'adaptation de pression (pa ancien), déterminée lors du dernier changement correspondant de rapport, si la valeur de réduction de la vitesse de rotation (Dnmot) se situe entre la valeur de réduction de la vitesse de rotation minimale (Dnmotmin) et celle de la vitesse de rotation maximale (Dnmotmax) (Dnmotmin < Dnmot < Dnmotmax) : (pa : = pa nouveau = pa ancien).
